# EUROPÄISCHE PATENTSCHRIFT

(11) **EP 2 492 739 B1**
(45) Veröffentlichungstag und Bekanntmachung des Hinweises auf die Patenterteilung: **24.04.2019**
(21) Anmeldenummer: 12000817.2
(22) Anmeldetag: 08.02.2012
(51) Int. Cl.: G02B 27/14

(54) **Nichtpolarisierender Strahlteiler mit Metallschicht**
Non-polarising beam splitter with metal layer
Séparateur de faisceau non polarisant avec couche métallique

(30) Priorität: 23.02.2011 DE 102011012155
(43) Veröffentlichungstag der Anmeldung: 29.08.2012
(73) Patentinhaber: Qioptiq Photonics GmbH & Co. KG, 37081 Göttingen (DE)
(72) Erfinder: Mewes, Stefan, 37120 Bovenden (DE); Meining, Stefan, 37170 Uslar (DE)
(74) Vertreter: Bosch Jehle Patentanwaltsgesellschaft mbH

(56) Entgegenhaltungen:
- US-A- 4 367 921
- US-A1- 2007 086 092
- JIN HUI SHI ET AL: "Design and analysis of metal-dielectric nonpolarizing beam splitters in a glass cube", APPLIED OPTICS, OPTICAL SOCIETY OF AMERICA, WASHINGTON, DC; US, Bd. 48, Nr. 18, 20. Juni 2009 (2009-06-20) , Seiten 3385-3390, XP001523821, ISSN: 0003-6935, DOI: 10.1364/AO.48.003385
- OPTILAYER LTD: "Features of OptiLayer Software Family", INTERNET CITATION, 21 April 2010 (2010-04-21), pages 1-6, XP002579201, Retrieved from the Internet: URL:http://www.optilayer.com/features.htm [retrieved on 2010-04-21]

## Beschreibung

Die Erfindung betrifft einen nichtpolarisierenden Strahlteiler der im Oberbegriff des Anspruchs 1 genannten Art.

Derartige Strahlteiler sind allgemein bekannt und weisen wenigstens ein Substrat auf, auf das eine teilreflektierende, eine Mehrzahl von Schichten aufweisende Beschichtung aufgebracht ist.

Derartige Strahlteiler werden beispielsweise im Zusammenhang mit einer optischen Untersuchung von Bauteilen unter Verwendung von Strahlung im UV-Bereich verwendet, beispielsweise bei der Untersuchung von Wafern.

Insbesondere bei der Untersuchung von Wafern gehen die Applikationen derzeit in zwei Richtungen. Zum einen werden Wafer einer Oberflächeninspektion mit geringer Bandbreite des verwendeten Lichtes unterzogen. Zum anderen wird die Oberflächeninspektion breitbandig in einem Wellenlängenbereich zwischen dem UV- und dem Nahinfrarot (NIR-)Bereich ausgeführt.

Durch US 4 367 921 ist ein nichtpolarisierender Strahlteiler bekannt, der einen speziellen Schichtenaufbau aufweist, der neben einer Metallschicht eine Mehrzahl von hoch- und niedrigbrechenden Schichten aufweist.

Ähnliche nichtpolarisierende Strahlteiler sind auch durch JP 60 113 203 A und JP 61 011 701 A bekannt.

Durch US 5 179 471 ist ein wellenlängenselektiver Spiegel und ein Verfahren zu seiner Herstellung bekannt.

Der Erfindung liegt die Aufgabe zugrunde, einen nichtpolarisierenden Strahlteiler anzugeben, der in einem breiten Wellenlängenbereich einsetzbar ist, dessen Funktion unabhängig von der Polarisation der verwendeten Strahlung ist und bei dem die sich über den Wellenlängenbereich ändernde Absorption wenigstens teilweise kompensiert ist.

Diese Aufgabe wird durch die im Anspruch 1 angegebene Erfindung gelöst.

Erfindungsgemäß weist die Schichtenfolge der Beschichtung
- wenigstens eine Metallschicht, die als Aluminiumschicht ausgebildet ist,
- wenigstens zwei erste Brechungsschichten aus einem hoch- oder mittelbrechenden dielektrischen Material und
- wenigstens zwei zweite Brechungsschichten aus einem niedrig- oder mittelbrechenden dielektrischen Material auf.

Die Erfindung stellt damit eine Beschichtung mit einem mindestens fünfschichtigen Aufbau bereit, bei dem sich beispielsweise und insbesondere die Transmissions- und Reflexionswerte in einem Wellenlängenbereich von 250 und 800 nm nicht ändern, wobei die Transmissions- und Relexionseigenschaften von der Polarisation der einfallenden Strahlung unabhängig sind.

Unter einem niedrigbrechenden Material wird erfindungsgemäß ein Material mit einem Brechungsindex n_{d} < 1,5 verstanden. Für ein im Sinne der Erfindung mittelbrechendes Material gilt 1,5 n_{d} < 1,8. Ein hochbrechendes Material im Sinne der Erfindung hat einen Brechungsindex n_{d} > 1,8.

Es hat sich überraschend gezeigt, dass sich besonders günstige Eigenschaften erreichen lassen, wenn die Schichtenfolge hinsichtlich des Materiales und/oder der Dicke der Schichten zu der Metallschicht symmetrisch ist.

Eine vorteilhafte Weiterbildung der Erfindung sieht vor, dass die Dicke der Metallschicht ca. 1-30 nm beträgt.

Andere vorteilhafte Weiterbildungen der Erfindung sehen vor, dass die Dicke der ersten Brechungsschichten jeweils ca. 1-200 nm, vorzugsweise ca. 40-70 nm, beträgt und/oder dass die Dicke der zweiten Brechungsschichten jeweils ca. 1-200 nm, vorzugsweise ca. 40-70 nm, beträgt.

Eine andere vorteilhafte Weiterbildung der Erfindung sieht vor, dass wenigstens eine der ersten Brechungsschichten und/oder wenigstens eine der zweiten Brechungsschichten fluoridisches Material und/oder oxidisches Material enthält oder aus einem oder mehreren solcher Materialien besteht.

Gemäß einer anderen vorteilhaften Weiterbildung der Erfindung ist oder enthält das fluoridische bzw. oxidische Material insbesondere der ersten Brechungsschichten LaF₃ und/oder GdF₃ und/oder Al₂O₃ und/oder HfO₂ und/oder NdF₃ und/oder CeF₃ auf.

Im Hinblick auf die zweiten Brechungsschichten sieht eine andere vorteilhafte Weiterbildung der Erfindung vor, ist oder enthält das fluoridische oder oxidische Material insbesondere der zweiten Brechungsschichten SiO₂ und/oder AlF₃ und/oder MgF₂ und/oder BaF₂ und/oder Na₃AlF₆ und/oder Na₅Al₃F₁₄ und/oder LaF₃ und/oder GdF₃ und/oder Al₂O₃ und/oder NdF₃ und/oder CeF₃.

Eine andere vorteilhafte Weiterbildung der Erfindung sieht vor, dass der Strahlteiler für eine Funktion in einem Wellenlängenbereich von 175 bis 1.300 nm, insbesondere 190 bis 900 nm, vorzugsweise 250 bis 800 nm, ausgelegt ist und dass in diesem Wellenlängenbereich das Verhältnis zwischen Reflexion und Transmission 1 oder annähernd 1 ist.

Eine andere vorteilhafte Weiterbildung der Erfindung sieht vor, dass in dem Wellenlängenbereich, für den der Strahlteiler ausgelegt ist, die Reflexion und Transmission 31% ± 9% beträgt.

Eine andere vorteilhafte Weiterbildung der Erfindung sieht vor, dass in dem Wellenlängenbereich, für den der Strahlteiler ausgelegt ist, die Differenz zwischen der s-Polarisation und der p-Polarisation des einfallenden Lichtes < 10%, insbesondere < 8%, ist.

Bei einem nichtpolarisierenden Strahlteiler ist zusätzlich zum Verhältnis Reflexion zu Transmission wichtig, dass sich die Werte der Reflexion und Transmission für die polarisierten Lichtkomponenten s und p nicht zu stark unterscheiden, wobei bei einem nichtpolarisierenden Strahlteiler das zweite Kriterium oft im Vordergrund steht und höher gewichtet wird als eine Änderung der Werte für Reflexion und Transmission mit der Wellenlänge. Die Differenz der Werte für die Reflexion bzw. Transmission der beiden Polarisationskomponenten des Lichtes ist erfindungsgemäß über den gesamten ausgelegten Wellenlängenbereich < 10%. Die Transmission bzw. Reflexion liegen erfindungsgemäß in diesem Bereich in einem Korridor von < 25%. Für den Bereich 250-800 nm liegt die Differenz zwischen den Polarisationskomponenten < 8%, und die Reflexion und Transmission liegen in einem Korridor von < 18%.

Erfindungsgemäß ist es möglich, dass die Beschichtung auf einem einzelnen Substrat angeordnet oder zwischen zwei Substraten aufgenommen ist, wie dies eine andere Weiterbildung der Erfindung vorsieht. Sofern die Beschichtung zwischen zwei Substraten aufgenommen ist, können diese als Prismen ausgebildet sein, die zusammen einen Würfel bilden. Die beiden Substrate können aus dem gleichen Material oder aus zwei verschiedenen Materialien bestehen. Sie können ohne Luftspalt miteinander verbunden werden, beispielsweise durch Verkitten, Ansprengen oder durch Kontaktieren in Immersion, wobei die Beschichtung (Coating) zwischen den Substraten aufgenommen ist.

Das Material des Substrates oder der Substrate ist entsprechend den jeweiligen Anforderungen innerhalb weiter Grenzen wählbar. Insoweit sieht eine vorteilhafte Weiterbildung der Erfindung vor, dass das Substrat oder wenigstens ein Substrat aus Quarzglas und/oder CaF₂ und/oder MgF₂ besteht.

Die Erfindung wird nachfolgend anhand der beigefügten Zeichnung näher erläutert, in der stark schematisiert Ausführungsbeispiele eines erfindungsgemäßen Strahlteilers dargestellt sind. Dabei bilden alle beschriebenen, in der Zeichnung dargestellten und in den Patentansprüchen beanspruchten Merkmale für sich genommen sowie in beliebiger Kombination miteinander den Gegenstand der Erfindung, unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: eine stark schematisierte Seitenansicht eines ersten Ausführungsbeispieles eines erfindungsgemäßen Strahlteilers,
- Fig. 2: nicht maßstäblich eine Schichtenfolge einer Beschichtung des Strahlteilers gemäß Fig. 1 und
- Fig. 3: in gleicher Darstellung wie Fig. 1 ein zweites Ausführungsbeispiel eines erfindungsgemäßen Strahlteilers.

In den Figuren der Zeichnung sind gleiche bzw. sich entsprechende Bauteile mit den gleichen Bezugszeichen versehen.

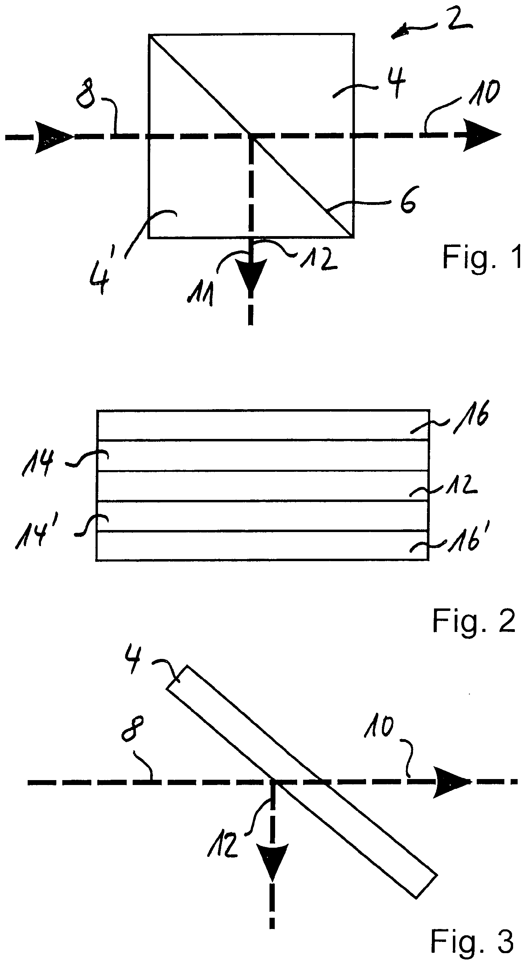

In Fig. 1 ist ein erstes Ausführungsbeispiel eines erfindungsgemäßen nichtpolarisierenden Strahlteilers 2 in einer Seitenansicht dargestellt, der aus zwei prismenartigen Substraten 4, 4' zusammengesetzt ist, zwischen denen eine teilreflektierende, eine Mehrzahl von Schichten aufweisende Beschichtung 6 aufgenommen ist. Die Funktion des Strahlteilers 2 besteht darin, einen einfallenden Lichtstrahl 8 durch Teiltransmission bzw. Teilreflexion in zwei Teilstrahlen 10 bzw. 11 aufzuspalten. Im übrigen sind Aufbau und Funktionsweise eines nichtpolarisierenden Strahlteilers dem Fachmann allgemein bekannt und werden daher hier nicht näher erläutert. Bei dem dargestellten Ausführungsbeispiel bestehen die Substrate 4, 4' aus Quarzglas und sind fest miteinander verbunden.

Der Aufbau der Beschichtung 6 wird nachfolgend anhand von Fig. 2 näher erläutert.

Fig. 2 stellt nicht maßstäblich einen Schnitt durch die Beschichtung 6 dar, die bei diesem Ausführungsbeispiel eine Metallschicht 12, zwei erste Brechungsschichten 14, 14' sowie zwei zweite Brechungsschichten 16, 16' aufweist. Bei dem dargestellten Ausführungsbeispiel ist die Schichtenfolge zu der Metallschicht 12 als Symmetrieebene hinsichtlich des Materiales der Schichten 14, 14', 16, 16' symmetrisch ausgebildet.

Erfindungsgemäß bestehen die ersten Brechungsschichten aus einem hoch- oder mittelbrechenden dielektrischen Material, während die zweiten Brechungsschichten aus einem niedrig- oder mittelbrechenden dielektrischen Material bestehen. Bei dem dargestellten Ausführungsbeispiel sind Material und Schichtdicken der Schichten 12, 14, 14', 16, 16' wie folgt gewählt:

| **Schicht** | **Material** | **Schichtdicke** |
|---|---|---|
| 16 | Al₂O₃ | 58,59 nm |
| 14 | HfO₂ | 46,22 nm |
| 12 | Al | 11,5 nm |
| 14' | HfO₂ | 49,22 nm |
| 16' | Al₂O₃ | 63,95 nm |

Bei dem dargestellten Ausführungsbeispiel ist der Strahlteiler 2 für eine Funktion in einem Wellenlängenbereich von 175 - 1200 nm und damit insbesondere für 250 - 800 nm ausgelegt, wobei in diesem Wellenlängenbereich das Verhältnis zwischen Reflexion und Transmission 1 oder annäherend 1 ist. Unter einer Auslegung für einen Wellenlängenbereich wird erfindungsgemäß verstanden, dass sich die Transmission/ Reflexionseigenschaften des Strahlteilers 2 in diesem Wellenlängenbereich nicht oder nur unwesentlich ändern. Bei dem dargestellten Ausführungsbeispiel beträgt in dem Wellenlängenbereich, für den der Strahlteiler 2 ausgelegt ist, die Reflexion und Transmission 31% ± 9%. In diesem Wellenlängenbereich ist bei dem dargestellten Ausführungsbeispiel die Differenz zwischen der s-Polarisation und der p-Polarisation des einfallenden Lichtes < 10%, insbesondere < 8%.

In Fig. 3 ist ein zweites Ausführungsbeispiel eines erfindungsgemäßen Strahlteilers 2 dargestellt, das sich von dem Ausführungsbeispiel gemäß Fig. 1 dadurch unterscheidet, dass ein einzelnes Substrat 4 vorgesehen ist, auf dessen Außenfläche die Beschichtung 6 aufgebracht ist. Bei dem dargestellten Ausführungsbeispiel beträgt der Einfallwinkel des Lichtes auf die Beschichtung 6 (Coating) 45°. Es ist erfindungsgemäß jedoch auch möglich, andere Einfallswinkel, beispielsweise von 20 oder 65°, zu verwenden.

Bei dem Ausführungsbeispiel gemäß Fig. 3, bei dem der Strahlteiler 2 nur ein einzelnes planparalleles Substrat 4 aufweist, wird eine andere Schichtenfolge verwendet, die hinsichtlich des Materials der Schichten nicht mehr vollständig symmetrisch zu der Metallschicht ist. Bei dem dargetellten Ausführungsbeispiel wird folgende Schichtenfolge verwendet:

| **Schicht** | **Material** | **Schichtdicke** |
|---|---|---|
| 16 | Al₂O₃ | 99,93 nm |
| 14 | HfO₂ | 51,94 nm |
| 12 | Al | 9,81 nm |
| 14' | HfO₂ | 40, 3 nm |
| 16' | MgF₂ | 73,07 nm |

Für die Aufspaltung der Polarisationkomponenten ergibt sich auch hier ein Wert kleiner 10%, für Reflexion und Transmission ein Korridor von kleiner 25%.

Die Erfindung stellt einen nichtpolarisierenden Strahlteiler bereit, der für eine Funktion in einem breiten Wellenlängenbereich geeignet ist und dessen Funktionsweise unabhängig von der Polarisation des einfallenden Lichtes ist. Außerdem ist erfindungsgemäß die sich über dem Wellenlängenbereich verändernde Absorption teilweise oder vollständig kompensiert.

## Patentansprüche

1. Nichtpolarisierender Strahlteiler,
mit wenigstens einem Substrat, auf das eine teilreflektierende, eine Mehrzahl von Schichten aufweisende Beschichtung aufgebracht ist,
**dadurch gekennzeichnet,**
**dass** die Schichtenfolge der Beschichtung (6)
- wenigstens eine Aluminiumschicht (12),
- wenigstens zwei erste Brechungsschichten (14, 14') aus einem hochbrechenden dielektrischen Material, wobei des hochbrechende dielektrische Material einen Brechungsindex größer als 1,8 aufweist, und
- wenigstens zwei zweite Brechungsschichten (16, 16') aus einem niedrig- oder mittelbrechenden dielektrischen Material, wobei das niedrigbrechende dielektrische Material einen Brechungsindex kleiner als 1,5 aufweist, und wobei das mittelbrechende dielektrische Material einen Brechungsindex zwischen 1,5 und 1,8 aufweist,
aufweist;
wobei jede der zwei ersten Brechungsschichten (14, 14') jeweils zwischen der Aluminiumschicht (12) und einer der zweiten Brechungsschichten (16, 16') angeordnet ist, und wobei der Strahlteiler (2) derart ausgelegt ist, dass in einem Wellenlängenbereich von 250 bis 800 nm und bei einem Einfallwinkel von 20° oder 45° von Licht auf die Beschichtung (6) die Differenz zwischen der s-Polarisation und der p-Polarisation des einfallenden Lichtes < 10% ist.

2. Strahlteiler nach Anspruch 1, **dadurch gekennzeichnet, dass** die Schichtenfolge zu der Aluminiumschicht (12) hinsichtlich des Materiales und/oder der Dicke der Schichten (14, 14', 16, 16') symmetrisch ist.

3. Strahlteiler nach Anspruch 1 oder 2, **dadurch gekennzeichnet, dass** die Dicke der Aluminiumschicht (12) 1-30 nm beträgt.

4. Strahlteiler nach einem der vorhergehenden Ansprüche, **dadurch gekennzeichnet, dass** die Dicke der ersten Brechungsschichten (14, 14') jeweils 1-200 nm, vorzugsweise 40-70 nm, beträgt.

5. Strahlteiler nach einem der vorhergehenden Ansprüche, **dadurch gekennzeichnet, dass** die Dicke der zweiten Brechungsschichten (16, 16') jeweils 1-200 nm, vorzugsweise 40-70 nm, beträgt.

6. Strahlteiler nach einem der vorhergehenden Ansprüche, **dadurch gekennzeichnet, dass** wenigstens eine der ersten Brechungsschichten (14, 14') und/oder wenigstens eine der zweiten Brechungsschichten (16, 16') fluoridisches Material und/oder oxidisches Material enthält oder aus einem oder mehreren solcher Materialien besteht.

7. Strahlteiler nach Anspruch 6, **dadurch gekennzeichnet, dass** das fluoridische bzw. oxidische Material, insbesondere der ersten Brechungsschichten (14, 14'), LaF₃ und/oder GdF₃ und/oder Al₂O₃ und/oder HfO₂ und/oder NdF₃ und/oder CeF₃ ist.

8. Strahlteiler nach Anspruch 6 oder 7, **dadurch gekennzeichnet, dass** das fluoridische oder oxidische Material, insbesondere der zweiten Brechungsschichten (16, 16'), SiO₂ und/oder AlF₃ und/oder MgF₂ und/oder BaF₂ und/oder Na₃AlF₆ und/oder Na₅Al₃F₁₄ und/oder LaF₃ und/oder GdF₃ und/oder Al₂O₃ und/oder NdF₃ und/oder CeF₃ ist.

9. Strahlteiler nach einem der vorhergehenden Ansprüche, **dadurch gekennzeichnet, dass** in dem Wellenlängenbereich von 250 bis 800 nm das Verhältnis zwischen Reflexion und Transmission 1 oder annähernd 1 ist.

10. Strahlteiler nach Anspruch 9, **dadurch gekennzeichnet, dass** in dem Wellenlängenbereich von 250 bis 800 nm die Reflexion und Transmission 31% ± 9% beträgt.

11. Strahlteiler nach Anspruch 9 oder 10, **dadurch gekennzeichnet, dass** in dem Wellenlängenbereich von 250 bis 800 nm die Differenz zwischen der s-Polarisation und der p-Polarisation des einfallenden Lichtes < 8%, ist.

12. Strahlteiler nach einem der vorhergehenden Ansprüche, **dadurch gekennzeichnet, dass** die Beschichtung (6) auf einem einzelnen Substrat (4) angeordnet oder zwischen zwei Substraten (4, 4') aufgenommen ist.

13. Strahlteiler nach einem der vorhergehenden Ansprüche, **dadurch gekennzeichnet, dass** das Substrat (4) oder wenigstens ein Substrat (4) aus Quarzglas und/oder CaF₂ und/oder MgF₂ besteht.

## Claims

1. Non-polarizing beam splitter
comprising at least one substrate on which a partially reflective coating comprising a plurality of layers is applied,
**characterized in that**
the layer sequence of the coating (6) comprises
- at least one aluminum layer (12),
- at least two first refraction layers (14, 14') of a highly refractive dielectric material, wherein the highly refractive dielectric material has a refraction index of larger than 1.8, and
- at least two second refraction layers (16, 16') of a lowly or medium refractive dielectric material, wherein the lowly refractive dielectric material has a refraction index of less than 1.5, and wherein the medium refractive dielectric material has a refraction index of between 1.5 and 1.8,
wherein each of the two first refraction layers (14, 14') is disposed between the aluminum layer (12) and one of the second refraction layers (16, 16'), respectively, and
wherein the beam splitter (2) is designed such that, in a wavelength range of 250 to 800 nm and with an incidence angle of 20° or 45° of light on the coating (6), the difference between the s-polarization and the p-polarization of the incident light is < 10%.

2. The beam splitter of claim 1, **characterized in that** the layer sequence toward the aluminum layer (12) is symmetrical with respect to the material and/or the thickness of the layers (14, 14', 16, 16').

3. The beam splitter according to claim 1 or 2, **characterized in that** the thickness of the aluminum layer (12) is 1-30 nm.

4. The beam splitter according to any of the preceding claims, **characterized in that** the thickness of the first refraction layers (14, 14') is 1-200 nm each, preferably 40-70 nm.

5. The beam splitter according to any of the preceding claims, **characterized in that** the thickness of the second refraction layers (16, 16') is 1-200 nm each, preferably 40-70 nm.

6. The beam splitter according to any of the preceding claims, **characterized in that** at least one of the first refraction layers (14, 14') and/or at least one of the second refraction layers (16, 16') comprises fluoridic material and/or oxidic material, or consists of one or several such materials.

7. The beam splitter according to claim 6, **characterized in that** the fluoridic and/or oxidic material, especially of the first refraction layers (14, 14'), is LAF₃ and/or GdF₃ and/or Al₂O₃ and/or HfO₂ and/or NdF₃ and/or CeF₃.

8. The beam splitter according to claim 6 or 7, **characterized in that** the fluoridic or oxidic material, especially of the second refraction layers (16, 16'), is SiO₂ and/or AlF₃ and/or MgF₂ and/or BaF₂ and/or Na₃Alf₆ and/or Na₅Al₃F₁₄ and/or LaF₃ and/or GdF₃ and/or Al₂O₃ and/or NdF₃ and/or CeF₃.

9. The beam splitter according to any of the preceding claims, **characterized in that**, in the wave length range of 250 to 800 nm, the ratio between reflection and transmission is 1 or approximately 1.

10. The beam splitter according to claim 9, **characterized in that**, in the wavelength range of 250 to 800 nm, the reflection and transmission is 31% ± 9%.

11. The beam splitter according to claim 9 or 10, **characterized in that**, in the wavelength range of 25 to 800 nm, the difference between the s-polarization and the p-polarization of the incident light is < 8%.

12. The beam splitter according to any of the preceding claims, **characterized in that** the coating (6) is arranged on a single substrate (4) or accommodated between two substrates (4, 4').

13. The beam splitter according to any of the preceding claims, **characterized in that** the substrate (4) or at least one substrate (4) consists of quartz glass and/or CaF₂ and/or MgF₂.

## Revendications

1. Séparateur de faisceau non polarisant, comportant au moins un substrat sur lequel est appliqué un revêtement partiellement réfléchissant présentant une pluralité de couches,
**caractérisé en ce que**
la succession de couches du revêtement (6) présente
- au moins une couche d'aluminium (12),
- au moins deux premières couches réfractives (14, 14') en un matériau diélectrique à fort pouvoir réfringent, le matériau diélectrique à fort pouvoir réfringent présentant un indice de réfraction supérieur à 1,8 et
- au moins deux deuxièmes couches réfractives (16, 16') en un matériau diélectrique à faible ou moyen pouvoir réfringent, le matériau diélectrique à faible pouvoir réfringent présentant un indice de réfraction inférieur à 1,5 et le matériau diélectrique à moyen pouvoir réfringent présentant un indice de réfraction compris entre 1,5 et 1,8 ;
dans lequel chacune des deux premières couches réfractives (14, 14') est disposée respectivement entre la couche d'aluminium (12) et l'une des deuxièmes couches réfractives (16, 16'), et
dans lequel le séparateur de faisceau (2) est conçu de telle sorte que, dans une plage de longueurs d'onde de 250 à 800 nm et à un angle d'incidence de 20° ou 45° de la lumière sur le revêtement (6), la différence entre la polarisation s et la polarisation p de la lumière incidente est inférieure à 10 %.

2. Séparateur de faisceau selon la revendication 1, **caractérisé en ce que** la succession de couches est symétrique par rapport à la couche d'aluminium (12) en ce qui concerne le matériau et/ou l'épaisseur des couches (14, 14', 16, 16').

3. Séparateur de faisceau selon la revendication 1 ou 2, **caractérisé en ce que** l'épaisseur de la couche d'aluminium (12) est de 1 à 30 nm.

4. Séparateur de faisceau selon l'une des revendications précédentes, **caractérisé en ce que** l'épaisseur de chacune des premières couches réfractives (14, 14') est de 1 à 200 nm, de préférence de 40 à 70 nm.

5. Séparateur de faisceau selon l'une des revendications précédentes, **caractérisé en ce que** l'épaisseur de chacune des deuxièmes couches réfractives (16, 16') est de 1 à 200 nm, de préférence de 40 à 70 nm.

6. Séparateur de faisceau selon l'une des revendications précédentes, **caractérisé en ce qu'**au moins une des premières couches réfractives (14, 14') et/ou au moins une des deuxièmes couches réfractives (16, 16') contient un matériau de type fluorure et/ou un matériau de type oxyde ou est consistée d'un ou plusieurs de tels matériaux.

7. Séparateur de faisceau selon la revendication 6, **caractérisé en ce que** le matériau de type fluorure ou oxyde, en particulier des premières couches réfractives (14, 14'), est LaF₃ et/ou GdF₃ et/ou Al₂O₃ et/ou HfO₂ et/ou NdF₃ et/ou CeF₃.

8. Séparateur de faisceau selon la revendication 6 ou 7, **caractérisé en ce que** le matériau de type fluorure ou oxyde, en particulier des deuxièmes couches de réfraction (16, 16'), est SiO₂ et/ou AlF₃ et/ou MgF₂ et/ou BaF₂ et/ou Na₃AlF₆ et/ou Na₅Al₃F₁₄ et/ou LaF₃ et/ou GdF₃ et/ou Al₂O₃ et/ou NdF₃ et/ou CeF₃.

9. Séparateur de faisceau selon l'une des revendications précédentes, **caractérisé en ce que** dans la plage de longueurs d'onde de 250 à 800 nm, le rapport entre réflexion et transmission est de 1 ou approximativement de 1.

10. Séparateur de faisceau selon la revendication 9, **caractérisé en ce que** dans la plage de longueurs d'onde de 250 à 800 nm, la réflexion et la transmission sont de 31 % ± 9 %.

11. Séparateur de faisceau selon la revendication 9 ou 10, **caractérisé en ce que** dans la plage de longueurs d'onde de 250 à 800 nm, la différence entre la polarisation s et la polarisation p de la lumière incidente est inférieure à 8 %.

12. Séparateur de faisceau selon l'une des revendications précédentes, **caractérisé en ce que** le revêtement (6) est disposé sur un seul substrat (4) ou est reçu entre deux substrats (4, 4').

13. Séparateur de faisceau selon l'une des revendications précédentes, **caractérisé en ce que** le substrat (4) ou au moins un substrat (4) est constitué de verre de quartz et/ou de CaF₂ et/ou de MgF₂.
